# EUROPÄISCHE PATENTANMELDUNG

(11) **EP 2 092 822 A1**
(43) Veröffentlichungstag der Anmeldung: **26.08.2009**
(21) Anmeldenummer: 08151880.5
(22) Anmeldetag: 25.02.2008
(51) Int. Cl.: A01N 25/04, A01N 43/38

(54) **Suspensionskonzentrate auf Ölbasis**

(71) Anmelder: Bayer CropScience AG, 40789 Monheim (DE)
(72) Erfinder: Die Erfindernennung liegt noch nicht vor

(57) **Zusammenfassung**

Neue Suspensionskonzentrate auf Ölbasis, bestehend aus
- mindestens einer bei Raumtemperatur festen Verbindung der Formel (I),
- mindestens einem Penetrationsförderer,
- mindestens einem Pflanzenöl,
- mindestens einem nicht-ionischen Tensid und/oder mindestens einem anionischen Tensid und
- gegebenenfalls einem oder mehreren Zusatzstoffen aus den Gruppen der Emulgiermittel, der schaumhemmenden Mittel, der Konservierungsmittel, der Antioxydantien, der Farbstoffe und/oder der inerten Füllmaterialien,

ein Verfahren zur Herstellung dieser Suspensionskonzenttate und deren Verwendung zur Applikation der enthaltenen Wirkstoffe

## Beschreibung

Die vorliegende Erfindung betrifft neue, ölbasierte Suspensionskonzentrate von cyclischen Ketoenolen, ein Verfahren zur Herstellung dieser Formulierungen und deren Verwendung zur Applikation der enthaltenen cyclischen Ketoenole

Es ist bereits bekannt, dass bestimmte cyclische Ketoenole insektizide und/oder akarizide Eigenschaften besitzen (siehe z B WO 98/05638 und WO 04/007448) Auch sind bereits zahlreiche wasserfreie Suspensionskonzentrate von agrochemischen Wirkstoffen bekannt geworden So werden in EP-A 0 789 999 Formulierungen dieses Typs beschrieben, die neben Wirkstoff und Öl ein Gemisch verschiedener Tenside - darunter auch solche, die als Penetrationsförderer dienen - sowie ein hydrophobiertes Alumoschichtsilikat als Verdickungsmittel enthalten Die Stabilität dieser Zubereitungen ist gut Nachteilig ist aber, dass zwingend ein Verdickungsmittel vorhanden ist, denn dadurch wird die Herstellung aufwendiger Außerdem absorbiert das Verdickungsmittel jeweils einen Teil der zugesetzten Menge an Penetrationsförderer, der deshalb für seine eigentliche Funktion nicht zur Verfügung steht.

In WO 03/000053 werden Formulierungen dieses Typs beschrieben, die neben Wirkstoff und Öl ein Gemisch verschiedener Tenside, - darunter auch solche, die als Penetrationsförderer dienen -, enthalten Die beschriebenen Formulierungen brauchen zur Stabilisierung kein Verdickungsmittel In dieser Publikation wird die synergistische Wirkung von Pflanzenölen und Penetrationsförderern hervorgehoben Vorteil dieser Formulierungen ist, dass deren Herstellung weniger aufwendig ist als die Zubereitung entsprechender Formulierungen, in denen Verdickungsmittel vorhanden sind

Weiterhin werden in WO 05/084441 Formulierungen dieses Typs beschrieben, die neben bestimmten cyclischen Ketoenolen und Öl einen Penetrationsförderer enthalten Als besonders bevorzugte Penetrationsförderer werden hier Alkanolethoxylate genannt. Auch diese Formulierungen enthalten kein Verdickungsmittel

Nachteil der in WO 05/084441 beschriebenen ölbasierten Suspensionskonzentrate von cyclischen Ketoenolen ist, dass diese Formulierungen insbesondere bei Temperaturen unter 10°C eine seht hohe Viskosität zeigen Vorteil der hohen Viskosität der ölbasierten Suspensionskonzentfate ist, dass durch eine hohe Viskosität das Sedimentieren der Suspensionsteilchen im Konzentrat vermieden werden kann. Der starke Anstieg bei niedrigen Temperaturen fuhrt aber dazu, dass die Produkte bei der Anwendung unter solchen Bedingungen schlecht aus der Verpackung fließen Weiterhin ist das Ansetzen der Spritzbrühe mit hoch viskosen Formulierungen problematisch

Der vorliegenden Erfindung liegt die Aufgabe zugrunde stabile, lagerbare, ölbasierte Suspensionskonzentrate ohne Zugabe von Verdickungsmittel zu entwickeln, welche im Allgemeinen und insbesondere bei Temperaturen unter 10°C eine niedrige Viskosität zeigen und deshalb für den Anwender gut applizierbar sind

Es wurden nun neue Suspensionskonzentrate auf Ölbasis gefunden, die
- mindestens eine bei Raumtemperatur feste Verbindung der Formel (I) 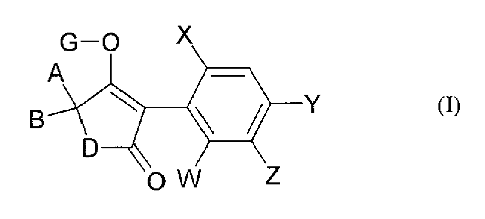
in welcher
- X: für Halogen, Alkyl, Alkoxy, Halogenalkyl, Halogenalkoxy oder Cyano steht,
- W, Y und Z: unabhängig voneinander für Wasserstoff, Halogen, Alkyl, Alkoxy, Halogenalkyl, Halogenalkoxy oder Cyano stehen,
- A: für Wasserstoff, jeweils gegebenenfalls durch Halogen substituiertes Alkyl, Alkoxyalkyl, gesättigtes, gegebenenfälls substituiertes Cycloalkyl steht, in welchem gegebenenfalls mindestens ein Ringatom durch ein Heteroatom ersetzt ist,
- B: für Wasserstoff oder Alkyl steht,
oder
- A und B: gemeinsam mit dem Kohlenstoffatom an das sie gebunden sind, für einen gesättigten oder ungesättigten, gegebenenfalls mindestens ein Heteroatom enthaltenden unsubstituierten oder substituierten Cyclus stehen,
- D: für NH oder Sauerstoff steht,
- G: für Wasserstoff (a) oder für eine der Gruppen 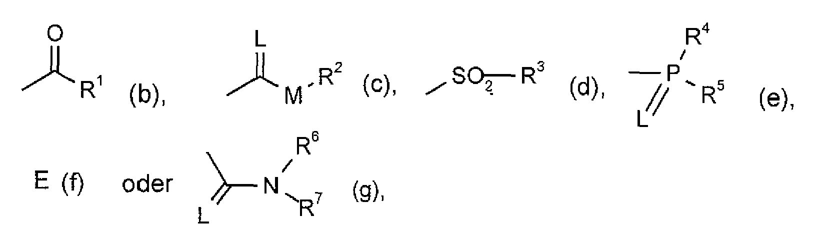
steht,
worin
- E: für ein Metallion oder ein Ammoniumion steht,
- L: für Sauerstoff oder Schwefel steht,
- M: für Sauerstoff oder Schwefel steht,
- R¹: für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetaryl, Phenoxyalkyl oder Hetaryloxyalkyl steht,
- R²: für jeweils gegebenenfalls durch Halogen substituiertes Alkyl, Alkenyl, Alkoxyalkyl, Polyalkoxyalkyl oder für jeweils gegebenenfalls substituiertes Cycloalkyl, Phenyl oder Benzyl steht,
- R³: für gegebenenfalls durch Halogen substituiertes Alkyl oder gegebenenfalls substituiertes Phenyl steht,
- R⁴ und R⁵: unabhängig voneinander für jeweils gegebenenfalls durch Halogen substituier tes Alkyl, Alkoxy, Alkylamino, Dialkylamino, Alkylthio, Alkenylthio, Cycloalkylthio oder für jeweils gegebenenfalls substituiertes Phenyl, Benzyl, Phenoxy oder Phenylthio stehen und
- R⁶ und R⁷: unabhängig voneinander für Wasserstoff, jeweils gegebenenfalls durch Halogen substituiertes Alkyl, Cycloalkyl, Alkenyl, Alkoxy, Alkoxyalkyl, für gegebenenfälls substituiertes Phenyl, für gegebenenfälls substituiertes Benzyl oder gemeinsam mit dem N-Atom, an das sie gebunden sind, für einen gegebenenfalls
durch Sauerstoff oder Schwefel unter brochenen gegebenenfalls substituierten Ring stehen
in Form ihrer Isomerengemische oder reinen Isomeren,
- mindestens einen Penetrationsförderer der Formel (II)

   R⁸-O-(-EO-)ₚ-(-PO-)_{q}-R⁹ (II)

   in welcher
   - R⁸: für geradkettiges oder verzweigtes Alkyl mit 4 bis 20 Kohlenstoffatomen steht,
   - R⁹: für H, Methyl, Ethyl, n-Propyl, i-Propyl, n-Butyl, i-Butyl, t-Butyl, n-Pentyl oder n-Hexyl steht,
   - EO: für CH₂-CH₂-O- steht,

   - PO: für 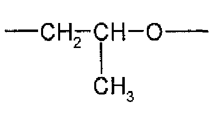 steht,
   - p: für Zahlen von 4 bis 8 steht und
   - q: für Zahlen von 6 bis 10 steht,

- mindestens ein Pflanzenöl,
- mindestens ein nicht-ionisches Iensid ausgewählt aus
   - Polyethylenoxid-polypropylenoxid-4-butoxybuthylether,
   - Potyethytengtykotethem von linearen Alkoholen,
   - Umsetzungsprodukten von Fettsäuren mit Ethylenoxid und
   - Mischungen dieser vorgenannten Tenside und/oder
- mindestens ein anionisches Tensid und
- gegebenenfalls einen oder mehrere Zusatzstoffe aus den Gruppen der Emulgiertmittel, der schaumhemmenden Mittel, der Konservietungsmittel, der Antioxydantien, der Farbstoffe und/oder der inerten Füllmaterialien (Materialien welche die Viskosität der Formulierung nicht beeinflussen)
enthalten

Weiterhin wurde gefunden, dass sich die erfindungsgemäßen Suspensionskonzentrate auf Ölbasis herstellen lassen, indem man die oben angegebenen Inhaltsstoffe miteinander vermischt und die entstehende Suspension gegebenenfalls anschließend mahlt

Schließlich wurde gefunden, dass sich die erfindungsgemäßen Suspensionskonzentrate auf Ölbasis sehr gut zur Applikation der enthaltenen Verbindungen der Formel (I) auf Pflanzen und/oder deren Lebensraum eignen

Es ist als äußert überraschend zu bezeichnen, dass die erfindungsgemäßen Suspensionskonzentrate auf Ölbasis eine deutlich niedrigere Viskosität, insbesondere bei Temperaturen unter 10 °C, zeigen im Vergleich zu den am ähnlichsten zusammengesetzten, vorbekannten Formulierungen Dieser Effekt war aufgrund des vorbeschriebenen Standes der Technik nicht vorhersehbar Weiterhin ist es sehr überraschend, dass die biologische Wirkung der erfindungsgemäßen Suspensionskonzentrate auf Ölbasis besser ist als die der am ähnlichsten zusammengesetzten, vorbekannten Formulierungen

Bevorzugte, besonders bevorzugt, ganz besonders bevorzugt, insbesondere bevorzugte und hervorgehobene Substituentendefinitionen für Verbindungen der Formel (I) im Folgenden erläutert:
- W: steht bevorzugt für Wasserstoff, C₁-C₄-Alkyl, C₁-C₄-Alkoxy, Chlor, Brom oder Fluor,
- X: steht bevorzugt für C₁-C₄-Alkyl, C₁-C₄-Alkoxy, C₁-C₄-Halogenalkyl, F luor, Chlor oder Brom,
- Y und Z: stehen unabhängig voneinander bevorzugt für Wasserstoff, C₁-C₄-Alkyl, Halogen, C₁-C₄-Alkoxy oder C₁-C₄-Halogenalkyl,
- A: steht bevorzugt für Wasserstoff oder jeweils gegebenenfalls durch Halogen substituiertes C₁-C₆-Alkyl oder C₃-C₈-Cycloalkyl,
- B: steht bevorzugt für Wasserstoff, Methyl oder Ethyl,
- A, B: und das Kohlenstoffatom an das sie gebunden sind, stehen bevorzugt für gesättigtes C₃-C₆-Cycloalkyl, worin gegebenenfalls ein Ringglied durch Sauerstoff oder Schwefel ersetzt ist und welches gegebenenfalls einfach oder zweifach durch C₁-C₄-Alkyl, Trifluormethyl oder C₁-C₄-Alkoxy substituiert ist,
- D: steht bevorzugt für NH oder Sauerstoff,
- G: steht bevorzugt für Wasserstoff (a) oder für eine der Gruppen 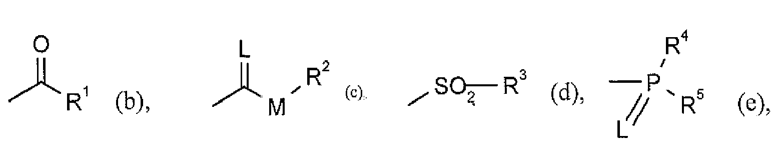 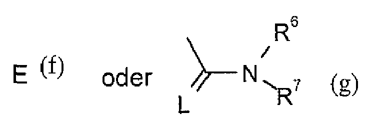 insbesondere für (a), (b), (c) oder (g)
in welchen
- E: für ein Metallion oder ein Ammoniumion steht,
- L: für Sauer stoff oder Schwefel steht und
- M: für Sauerstoff oder Schwefel steht,
- R¹: bevorzugt für jeweils gegebenenfalls durch Halogen substituiertes C₁-C₁₀-Alkyl, C₂-C₁₀-Alkenyl, C₁-C₄-Alkoxy-C₁-C₄-alkyl, C₁-C₄-Alkylthio-C₁-C₄-alkyl oder gegebenenfalls durch Fluor, Chlor, C₁-C₄-Alkyl oder C₁-C₂-Alkoxy substituiertes C₃-C₆-Cycloalkyl,
für gegebenenfalls durch Fluor, Chlor, Brom, Cyano, Nitro, C₁-C₄-Alkyl, C₁-C₄-Alkoxy, Trifluormethyl oder Trifluormethoxy substituiertes Phenyl,
für jeweils gegebenenfalls durch Chlor oder Methyl substituiertes Pyridyl oder Thienyl steht,
- R²: bevorzugt für jeweils gegebenenfalls durch Fluor oder Chlor substituiertes C₁-C₁₀-Alkyl, C₂-C₁₀-Alkenyl, C₁-C₄-Alkoxy-C₂-C₄-alkyl,
für gegebenenfalls durch Methyl oder Methoxy substituiertes C₅-C₆-Cycloalkyl oder
für jeweils gegebenenfalls durch Fluor, Chlor, Brom, Cyano, Nitro, C₁-C₄-Alkyl, C₁-C₄-Alkoxy, Trifluormethyl oder Trifluormethoxy substituiertes Phenyl oder Benzyl steht,
- R³: bevorzugt für gegebenenfalls durch Fluor substituiertes C₁-C₄-Alkyl oder für gegebenenfälls durch Fluor, Chlor, Brom, C₁-C₄-Alkyl, C₁-C₄-Alkoxy, Trifluormethyl, Trifluormethoxy, Cyano oder Nitro substituiertes Phenyl steht,
- R⁴: bevorzugt für jeweils gegebenenfalls durch Fluor oder Chlor substituiertes C₁-C₄-Alkyl, C₁-C₄-Alkoxy, C₁-C₄-Alkylamino, C₁-C₄-Alkylthio oder für jeweils gegebenenfalls durch Fluor, Chlor, Brom, Nitro, Cyano, C₁-C₄-Alkoxy, Trifluormethoxy, C₁-C₄-Alkylthio, C₁-C₄-Halogenalkylthio, C₁-C₄-Alkyl oder Trifluormethyl substituiertes Phenyl, Phenoxy oder Phenylthio steht,
- R³: bevorzugt für C₁-C₄-Alkoxy oder C₁-C₄-Thioalkyl steht,
- R⁶: bevorzugt für C₁-C₆-Alkyl, C₃-C₆-Cycloalkyl, C₁-C₆-Alkoxy, C₃-C₆-Alkenyl oder C₁-C₄-Alkoxy-C₁-C₄-alkyl steht,
- R⁷: bevorzugt für C₁-C₆-Alkyl, C₃-C₆-Alkenyl oder C₁-C₄-Alkoxy-C₁-C₄-alkyl steht,
- R⁶ und R⁷: zusammen bevorzugt für einen gegebenenfalls durch Methyl oder Ethyl substituierten C₃-C₆-Alkylenrest, in welchem gegebenenfalls ein Kohlenstoffatom durch Sauerstoff oder Schwefel ersetzt ist, stehen
in Form ihrer Isomerengemische oder reinen Isomeren
- W: steht besonders bevorzugt für Wasserstoff, Methyl, Ethyl, Chlor, Brom oder Methoxy,
- X: steht besonders bevorzugt für Chlor, Brom, Methyl, Ethyl, Propyl, i-Propyl, Methoxy, Ethoxy oder Trifluormethyl,
- Y und Z: stehen besonders bevorzugt unabhängig voneinander für Wasserstoff, Fluor, Chlor, Brom, Methyl, Ethyl, Propyl, i-Propyl, Trifluormethyl oder Methoxy,
- A: steht besonders bevorzugt für Methyl, Ethyl, Propyl, i-Propyl, Butyl, i-Butyl, sec-Butyl, tert -Butyl, Cyclopropyl, Cyclopentyl oder Cyclohexyl,
- B: steht besonders bevorzugt für Wasserstoff, Methyl oder Ethyl,
oder

- A, B: und das Kohlenstoffatom an das sie gebunden sind, stehen besonders bevorzugt für gesättigtes C₅-C₆-Cycloalkyl, worin gegebenenfalls ein Ringglied durch Sauerstoff ersetzt ist und welches gegebenenfalls einfach durch Methyl, Ethyl, Trifluormethyl, Methoxy, Ethoxy, Propoxy oder Butoxy substituiert ist,
- D: steht besonders bevorzugt für NH oder Sauerstoff,
- G: steht besonders bevorzugt für Wasserstoff (a) oder für eine der Gruppen 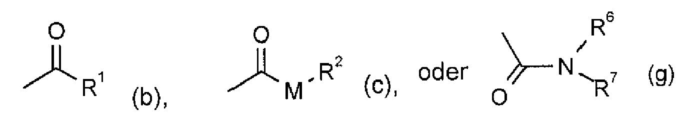
in welchen
- M: für Sauerstoff oder Schwefel steht,
- R¹: besonders bevorzugt für C₁-C₈-Alkyl, C₂-C₄-Alkenyl, Methoxymethyl, Ethoxymethyl, Ethylthiomethyl, cyclopropyl, Cyclopentyl oder Cyclohexyl,
für gegebenenfalls einfach bis zweifach durch Fluor, Chlor, Brom, Cyano, Nitro, Methyl, Ethyl, Methoxy, Trifluormethyl oder Trifluormethoxy substituiertes Phenyl,
für jeweils gegebenenfalls durch Chlor oder Methyl substituiertes Pyridyl oder Thienyl steht,
- R²: besonders bevorzugt für C₁-C₈-Alkyl, C₂-C₄-Alkenyl, Methoxyethyl, Ethoxyethyl oder für Phenyl oder Benzyl steht,
- R⁶ und R⁷: unabhängig voneinander besonders bevorzugt für Methyl, Ethyl oder zusammen für einen C₅-Alkylentest, in welchem die C₃-Methylengmppe durch Sauerstoff ersetzt ist, stehen,
in Form ihrer Isomerengemische oder reinen Isomeren
- W: steht ganz besonders bevorzugt für Wasserstoff oder Methyl,
- X: steht ganz besonders bevorzugt für Chlor, Brom oder Methyl,
- Y und Z: stehen ganz besonders bevorzugt unabhängig voneinander für Wasserstoff, Chlor, Brom oder Methyl,
- A, B: und das Kohlenstoffatom an das sie gebunden sind, stehen ganz besonders bevorzugt für gesättigtes C₅-C₆-Cycloalkyl, in welchem gegebenenfalls ein Ringglied durch Sauerstoff ersetzt ist und welches gegebenenfalls einfach durch Methyl, Trifluormethyl, Methoxy, Ethoxy, Propoxy oder Butoxy substituiert ist,
- D: steht ganz besonders bevorzugt für NH oder Sauerstoff,
- G: steht ganz besonders bevorzugt für Wasserstoff (a) oder für eine der Gruppen 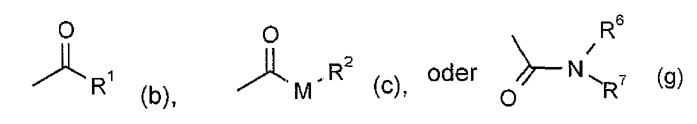 in welchen
- M: für Sauerstoff oder Schwefel steht,
- R¹: ganz besonders bevorzugt für C₁-C₈-Alkyl, C₂-C₄-Alkenyl, Methoxymethyl, Ethoxymethyl, Ethylthioniethyl, Cyclopropyl, Cyclopentyl, Cyclohexyl oder
für gegebenenfalls einfach durch Fluor, Chlor, Brom, Methyl, Methoxy, Trifluormethyl, Trifluormethoxy, Cyano oder Nitro substituiertes Phenyl,
für jeweils gegebenenfalls durch Chlor oder Methyl substituiertes Pyridyl oder Thienyl steht,
- R²: ganz besonders bevorzugt für C₁-C₈-Alkyl, C₂-C₄-Alkenyl, Methoxyethyl, Ethoxyethyl, Phenyl oder Benzyl steht,
- R⁶ und R⁷: unabhängig voneinander ganz besonders bevorzugt für Methyl, Ethyl oder zusammen für einen C₅-Alkylenrest, in welchem die C₃-Methylengruppe durch Sauerstoff ersetzt ist, stehen
in Form ihrer Isomerengemische oder reinen Isomeren

Insbesondere bevorzugt sind Suspensionskonzentrate enthaltend Verbindungen der Formel (I) aus folgenden Patenten/Patentanmeldungen, die auf Seite 1 zitiert sind, in welchen die Reste A, B, D, G, W, X, Y, Z, R¹, R², R⁶ und R⁷ die in den ganz besonders bevorzugten Bereichen genannte Bedeutung haben: WO 98105638, WO 041007448

Hervorgehoben aus diesen Anmeldungen sind die folgenden Verbindungen der Formel (I) 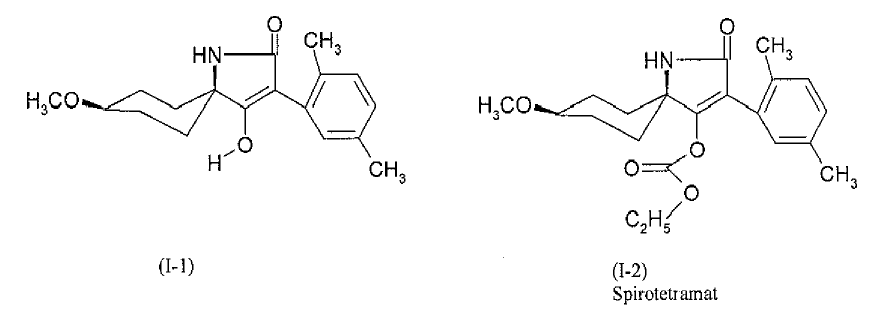 für erfindungsgemäße Suspensionskonzentrate einsetzbar

Als Penetrationsförderer kommen im vorliegenden Zusammenhang bestimmte Substanzen in Betracht, die üblicherweise eingesetzt werden, um das Eindringen von agrochemischen Wirkstoffen in Pflanzen zu verbessern. Penetrationsförderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können Die nachher und in der Literatur (Baur et al, 1997, Pesticide Science 51, 131-152) beschriebene Methode kann zur Bestimmung dieser Eigenschaft eingesetzt werden

Geeignet sind Alkanol-alkoxylate der Formel (II)

R⁸-O-(-EO-)ₚ-(-PO-)_{q}-R⁹ (II)

in welcher
- R⁸: für geradkettiges oder verzweigtes Alkyl mit 4 bis 20 Kohlenstoffatomen steht,
- R⁹: für H, Methyl, Ethyl, n-Propyl, i-Propyl, n-Butyl, i-Butyl, t-Butyl, n-Pentyl oder n-Hexyl steht,
- EO: für CH₂-CH₂-O- steht,
- PO: für 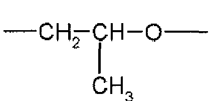 steht,
- p: für Zahlen von 4 bis 8 steht und
- q: für Zahlen von 6 bis 10 steht.

In den zuvor angegebenen Formeln steht
- R⁸: bevorzugt für Butyl, i-Butyl, n-Pentyl, i-Pentyl, Neopentyl, n-Hexyl, i-Hexyl, n-Octyl, iOctyl, 2-Ethyl-hexyl, Nonyl, i-Nonyl, Decyl, n-Dodecyl, i-Dodecyl, Lauryl, Myristyl, i-Tridecyl, Trimethyl-nonyl, Palmityl, Stearyl oder Eicosyl und
besonders bevorzugt für n-Hexyl, i-Hexyl, n-Octyl, i-Octyl, 2-Ethyl-hexyl, Nonyl, i-Nonyl, oder Decyl und
ganz besonders bevorzugt f`ür 2-Ethyl-hexyl.

In den zuvor angegebenen Formeln steht
- R⁹: bevorzugt für H, Methyl, Ethyl, n-Propyl oder i-Propyl und
besonders bevorzugt für H.

Als hervorgehobenes Beispiel für ein Alkanol-Alkoxylat der Formel (II) sei 2-Ethyl-hexylalkoxylat der Formel (II-1), 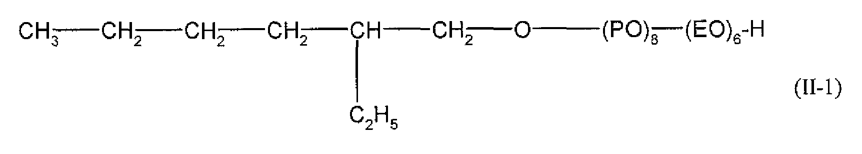 in welcher EO und PO die oben angegebenen Bedeutungen haben und die Zahlen 8 und 6 Durchschnittswerte darstellen, genannt.

Die Alkanol-alkoxylate sind durch die obigen Formeln allgemein definiert Bei diesen Substanzen handelt es sich um Gemische von Stoffen des angegebenen Typs mit unterschiedlichen Kettenlängen Für die Indices enechnen sich deshalb Durchschnittswerte, die auch von ganzen Zahlen abweichen können

Die Alkanol-alkoxylate der angegebenen Formeln sind bekannt und kommerziell erhältlich oder lassen sich nach bekannten Methoden herstellen

Als Pflanzenöle kommen alle üblicherweise in agrochemischen Mitteln einsetzbaren, aus Pflanzen gewinnbaren Öle in Frage Beispielhaft genannt seien Sonnenblumenöl, Rapsöl, Maisöl, Olivenöl und Sojabohnenöl

Die erfindungsgemäßen Suspensionskonzentrate auf Ölbasis enthalten mindestens ein nicht-ionisches Tensid und/oder mindestens ein anionisches Tensid.

Als nicht-ionische Tenside kommen Polyethylenoxid-polyptopylenoxid-4-butoxybuthylether, Polyethylenglykolether von linearen Alkoholen, Umsetzungsprodukte von Fettsäuren mit Ethylenoxid und Mischungen dieser Tenside in Betracht Bevorzugt enthalten die erfindungsgemäßen Zusammensetzungen Polyoxcyethylen-sorbitol-oleat und wenigstens ein weiteres der genannten nicht-ionischen Tenside.

Als anionische Tenside kommen in Pflanzenöl wenig lösliche Salze von Polystyrolsulfbnsäuren, Salze von Polyvinylsulfonsäuren, Salze von Naphthalinsulfonssäwe-Formaldehyd-Kondensationsprodukten, Salze von Kondensationsprodukten aus Naphthalinsulfonsäure, Phenolsulfonsäure und Formaldehyd sowie Salze von Ligninsulfonsäure in Betracht Bevorzugt sind Salze von Naphthalinsulfonsäure-Formaldehyd-Kondensationsprodukten.

Als Zusatzstoffe, die in den erfindungsgemäßen Formulierungen enthalten sein können, kommen Emulgatoren, Spreitmittel, schaumhemmende Mittel, Konservierungsmittel, Antioxydantien, Farbstoffe und inerte Füllmaterialien in Betracht Als Spreitmittel kommen alle üblicherweise für diesen Zweck in agro-chemischen Mitteln einsetzbaren Substanzen in Betracht. Bevorzugt sind Alkylsiloxane.

Bevorzugte Emulgatoren sind ethoxylierte Nonylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. - ethoxy-propoxylate, wobei Sorbitan-Derivate, Polyethylenoxid-Sorbitan-Fettsäuieester und Sorbitan-Fettsäureester beispielhaft genannt seien

Als schaumhemmende Stoffe kommen alle üblicherweise für diesen Zweck in agrochemischen Mitteln einsetzbaren Substanzen in Betracht Bevorzugt sind Silikonöle und Magnesiumstearat

Als Konservierungsmittel kommen alle üblicherweise für diesen Zweck in agrochemischen Mitteln dieses Typs einsetzbanen Substanzen in Frage Als Beispiele genannt seien Preventol® (Fa Bayer AG) und Proxel®

Als Antioxydantien kommen alle üblicherweise für diesen Zweck in agrochemischen Mitteln einsetzbaren Substanzen in Betracht Bevorzugt ist 2,6-Di-tert-butyl-4-methylphenol

Als Farbstoffe kommen alle üblieherweise für diesen Zweck in agrochemischen Mitteln einsetzbaren Substanzen in Frage Beispielhaft genannt seien Titandioxid, Farbruß, Zinkoxid und Blaupigmente sowie Permanentrot FGR

Als inerte Füllmaterialien kommen alle üblicherweise für diesen Zweck in agrochemischen Mitteln einsetzbaren Substanzen in Betracht, die nicht als Verdickungsmittel fungieren. Bevorzugt sind anorganische Partikel, wie Carbonate, Silikate und Oxide, sowie auch organische Substanzen, wie Harnstoff-Formaldehyd-Kondensate. Beispielhaft erwähnt seien Kaolin, Rutil, Siliciumdioxid, sogenannte hochdisperse Kieselsäure, Kieselgele, sowie natürliche und synthetische Silikate, außerdem Talkum

Der Gehalt an den einzelnen Komponenten kann in den erfindungsgemäßen Suspensionskonzentraten auf Ölbasis innerhalb eines größeren Bereiches variiert werden. So liegen die Konzentrationen
- an Verbindung der Formel (I) im allgemeinen zwischen 5 und 30 Gew-%, vorzugsweise zwischen 10 und 25 Gew -%,
- an Penetrationsförderer im allgemeinen zwischen 5 und 30 Gew -%, vorzugsweise zwischen 15 und 25 Gew -%,
- an Pflanzenöl im allgemeinen zwischen 20 und 55 Gew -%, vorzugsweise zwischen 25 und 50 Gew -%,
- an Tensiden im allgemeinen zwischen 1 und 25 Gew -%, vorzugsweise zwischen 1,0 und 15 Gew-%, ganz vorzugsweise zwischen 1,5 und 5 Gew -% und
- an Zusatzstoffen im allgemeinen zwischen 0 und 25 Gew -%, vorzugsweise zwischen 0 und 20 Gew -%.

Die Herstellung der erfindungsgemäßen Suspensionskonzentrate auf Ölbasis erfolgt in der Weise, dass man die Komponenten in den jeweils gewünschten Verhältnissen miteinander vermischt Die Reihenfolge, in der die Bestandteile miteinander vermengt werden, ist beliebig. Zweckmäßigerweise setzt man die festen Komponenten in feingemahlenem Zustand ein. Es ist aber auch möglich, die nach dem Vermengen der Bestandteile entstehende Suspension zunächst einer Grob- und dann einer Feinmahlung zu unterziehen, so dass die mittlere Teilchengröße unterhalb von 20 µm liegt Bevorzugt sind Suspensionskonzentrate, in denen die festen Partikel eine mittlere Teilchengröße zwischen 1 und 10 µm aufweisen.

Die Temperaturen können bei der Durchführung des erfindungsgemäßen Verfahrens in einem bestimmten Bereich vatiiert werden Man arbeitet im allgemeinen bei Temperaturen zwischen 10°C und 60°C, vorzugsweise zwischen 15°C und 40°C Zur Durchführung des erfindungsgemäßen Verfahrens kommen übliche Misch- und Mahlgeräte in Betracht, die zur Herstellung von agrochemischen Formulierungen eingesetzt werden.

Bei den erfindungsgemäßen Suspensionskonzentraten auf Ölbasis handelt es sich um Formulierungen, die auch nach längerer Lagerung bei erhöhten Temperaturen oder in der Kälte stabil bleiben, da kein Kristallwachstum beobachtet wird Sie lassen sich durch Verdünnen mit Wasser in homogene Spritzflüssigkeiten überführen Die Anwendung dieser Spritzflüssigkeiten erfolgt nach üblichen Methoden, also zum Beispiel durch Verspritzen, Gießen oder Injizieren.

Die Aufwandmenge an den erfindungsgemäßen Suspensionskonzentraten auf Ölbasis kann innerhalb eines größeren Bereiches variiert werden Sie richtet sich nach den jeweiligen agrochemischen Wirkstoffen und nach deren Gehalt in den Formulierungen

Mit Hilfe der erfindungsgemäßen Suspensionskonzentrate auf Ölbasis lassen sich agrochemische Wirkstoffe in besonders vorteilhafter Weise auf Pflanzen und/oder deren Lebensraum ausbringen Die enthaltenen agrochemischen Wirkstoffe entfalten dabei eine bessere biologische Wirksamkeit (insbesondere eine bessere insektizide Wirkung und/oder eine bessere Kulturpflanzenverträglichkeit) als bei Applikation in Form der entsprechenden herkömmlichen Formulierungen

Erfindungsgemäß können alle Pflanzen und Pflanzenteile behandelt werden Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen) Kultutpflanzen können Pflanzen sein, die durch konventionelle Züchtungs- und Optimierungsmethoden oder durch biotechnologische und gentechnologische Methoden oder Kombinationen dieser Methoden erhalten weiden können, einschließlich der transgenen Pflanzen und einschließlich der durch Sortenschutzreehte schützbaren oder nicht schützbaren Pflanzensorten Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen

Die erfindungsgemäße Behandlung der Pflanzen und Pflanzenteile mit den Suspensionskonzentraten erfolgt direkt oder durch Einwirkung auf deren Umgebung, Lebensraum oder Lagerraum nach den üblichen Behandlungsmethoden, z B durch Tauchen, Sprühen, Spritzen, Verdampfen, Vernebeln, Aufstreichen und bei Vermehtungsmaterial, insbesondere bei Samen, weiterhin durch ein- oder mehrschichtiges Umhüllen

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw "Teile von Pflanzen" oder "Pflanzenteile" wurde oben erläutert

Besonders bevorzugt werden erfindungsgemäß Pflanzen der jeweils handelsüblichen oder in Gebrauch befindlichen Pflanzensorten behandelt Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenatten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen

Zu den bevorzugten erfindungsgemäß zu behandelnden transgenen (gentechnologisch erhaltenen) Pflanzen bzw Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe Als Beispiele transgener Pflanzen werden die wichtigen Kulturpflanzen, wie Getreide (Weizen, Reis), Mais, Soja, Kartoffel, Baumwolle, Raps, Rüben, Zuckerrohr sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z B durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt weiden (im Folgenden "Bt Pflanzen") Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B "PAI"-Gen) Die jeweils die gewünschten Eigenschaften ("Traits") verleihenden Gene können auch in Kombinationen miteinander in den transgenen Pflanzen votkommen Als Beispiele für "Bt Pflanzen" seien Maissorten, Baumwollsorten, Sojasorten und Kartoffelsorten genannt, die unter den Handelsbezeichnungen YIELD GARD® (z B Mais, Baumwolle, Soja), KnockOut® (z.B. Mais), StarLink® (z B. Mais), Bollgard® (Baumwolle), Nucotn® (Baumwolle) und NewLeaf® (Kartoffel) vertrieben werden Als Beispiele für Herbizid tolerante Pflanzen seien Maissorten, Baumwollsorten und Sojasorten genannt, die unter den Handelsbezeichnungen Roundup Ready@ (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfbnylharnstoffe z B. Mais) vertrieben werden Als Herbizid resistente (konventionell auf Herbizid-Toleranz gezüchtete) Pflanzen seien auch die unter der Bezeichnung Clearfield® vertriebenen Sorten (z B Mais) erwähnt Selbstverständlich gelten diese Aussagen auch für in der Zukunft entwickelte bzw zukünftig auf den Markt kommende Pflanzensorten mit diesen oder zukünftig entwickelten genetischen Eigenschaften ("Traits")

Die aufgeführten Pflanzen können besonders vorteilhaft mit den erfindungsgemäßen Suspensionskonzentraten behandelt werden Die bei den Suspensionskonzentraten oben angegebenen Vorzugsbereiche gelten auch für die Behandlung dieser Pflanzen Besonders hervorgehoben sei die Pflanzenbehandlung mit den im vorliegenden Text speziell aufgeführten Suspensionskonzentraten

Die Erfindung wird durch die folgenden Beispiele veranschaulicht.

### Beispiele

### Herstellungsbeispiele

### Beispiel 1

Zur Herstellung eines Suspensionskonzentrates werden

| | |
|---|---|
| 150,0 g | der Verbindung der Formel (1-2) |
| 100,0 g | Arlatone T(V) |
| 30,0 | g Atlox 4894 |
| 5,0 g | Morwet D 425 |
| 0,5 g | Silfbam SC 1132 |
| 2,0 g | wasserfreie Zitronensäure |
| 2,0 g | Vulkanox BHT |

unter Rühren bei Raumtemperatur in ein Gemisch aus

| | |
|---|---|
| 200,0 g | der Verbindung der Formel (II-1) und |
| 510,5 g | Sonnenblumenöl |

gegeben Nach beendeter Zugabe wird noch 10 Minuten bei Raumtemperatur nachgerührt Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen

### Beispiel 2

Zur Herstellung eines Suspensionskonzentrates werden

| | |
|---|---|
| 150,0 g | der Verbindung der Formel (1-2) |
| 100,0 g | Arlatone I(V) |
| 20,0 g | Atlox 4894 |
| 5,0 g | Morwet D 425 |
| 0,5 g | Silfoam SC 1132 |
| 2,0 g | wasserfreie Zitronensäure |
| 2,0 g | Vulkanox BHI |

unter Rühren bei Raumtemperatur in ein Gemisch aus

| | |
|---|---|
| 200,0 g | der Verbindung der Formel (II-1) und |
| 520,5 g | Sonnenblumenöl |

gegeben Nach beendeter Zugabe wird noch 10 Minuten bei Raumtemperatur nachgerührt Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen

### Beispiel 3

Zur Her stellung eines Suspensionskonzentrates werden

| | |
|---|---|
| 150,0 g | der Verbindung der Formel (I-2) |
| 100,0 g | Arlatone I(V) |
| 10,0 g | Atlas G 5000 |
| 10,0 g | Synperonic A7 |
| 5,0 g | Morwet D 425 |
| 0,5 g | Silfoam SC 1132 |
| 2,0 g | wasserfreie Zitronensäure |
| 2,0 g | Vulkanox BHT |

unter Rühren bei Raumtemperatur in ein Gemisch aus

| | |
|---|---|
| 200,0 g | der Verbindung der Formel (II-1) und |
| 520,5 g | Sonnenblumenöl |

gegeben Nach beendeter Zugabe wird noch 10 Minuten bei Raumtemperatur nachgerührt Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen

### Beispiel 4

Zur Hertstellung eines Suspensionskonzenttates werden

| | |
|---|---|
| 150,0 g | der Verbindung der Formel (I-2) |
| 100,0 g | Arlatone T(V) |
| 10,0 g | Atlas G 5000 |
| 10,0 g | Synperonic A3 |
| 5,0 g | Morwet D425 |
| 0,5 g | Silfoam SC 11.32 |
| 2,0 g | wasserfreie Zitronensäure |
| 2,0 g | Vulkanox BHT |

unter Rühren bei Raumtemperatur in ein Gemisch aus

| | |
|---|---|
| 200,0 g | der Verbindung der Formel (II-1) und |
| 520,5 g | Sonnenblumenöl |

gegeben Nach beendeter Zugabe wird noch 10 Minuten bei Raumtemperatur nachgetührt. Die dabei entstehende homogene Suspension wird zunächst einer Grob- und dann einer Feinmahlung unterworfen, so dass eine Suspension erhalten wird, in der 90 % der Feststoffpartikel eine Teukcgebgröße unter 6 µm aufweisen

### Vergleichsbeispiel I

Zur Herstellung eines Suspensionskonzentrates werden

| | |
|---|---|
| 150,0 g | der Verbindung (1-2) |
| 100 g | Arlatone T(V) |
| 80 g | Zephrym PD 2206 |
| 20 g | Borresperse NA |
| 0,5 g | Silfoam SC 1132 |
| 2,0 g | wasserfreie Zitronensäure |
| 2,0 g | Vulkanox BHT |

unter Rühren bei Raumtemperatur in ein Gemisch aus

| | |
|---|---|
| 200 g | Alkanol-Alkoxylate der Formel (2) |

CH₃-(CH₂)ₜ-CH₂-O-(-CH₂-CH₂-O-)ᵤ-H (2)

in welcher
- t: für Zahlen von 9 bis 12 steht und
- u: für Zahlen von 7 bis 9 steht
- 425,5 g: Sonnenblumenöl
gegeben. Nach beendeter Zugabe wird noch 10 Minuten bei Raumtemperatur nachgerührt Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen

**Tabelle 1**

| Handelsname | Komposition | Lieferant |
|---|---|---|
| Arlatone T(V) | Polyoxyethylen-soibitol-oleat | Croda |
| Atlas G 5000 | Propoxylierter und ethoxylierter 4-Butoxybutyl-alkohol | Croda |
| Atlox 4894 | Gemisch aus polyethoxyliertem (5-9) Fettalkohol (C₁₂₋₁₅) und einem propoxylierten und ethoxylierten 4-Butoxybutyl-alkohol | Croda |
| Borresperse NA | Ligninsulfonat | Borregaard |
| Morwet D 425 | Naphthalinsulfonat | Akzo Nobel |
| Silfoam SC 1132 | Polydimethylsiloxan | Wacker Silicones |
| Synperonic A3 | Polyethoxylierter (1-4) Fettalkohol (C₁₂₋₁₅) | Croda |
| Synperonic A7 | Polyethoxylierter (5-9) Fettalkohol (C₁₂₋₁₅) | Croda |
| Vulkanox BHT | 2-6-Di-tert-butyl-4-methylphenol | Lanxess AG |
| Zephrym PD 2206 | Polyoxyalkylenamin-Derivat ????? Octadecanoic acid, 12-hydroxy-, polymer with □-hydro-□ -hydtoxypoly(oxy-1,2-ethanediyl) | Croda |

## Patentansprüche

1. Suspensionskonzentrate auf Ölbasis, enthaltend
- mindestens eine bei Raumtemperatur feste Verbindung der Formel (I) 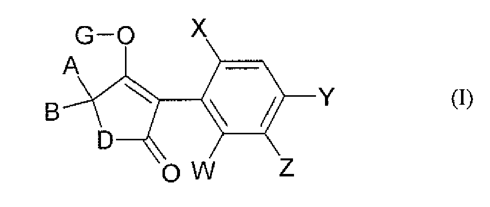 in welcher
X für Halogen, Alkyl, Alkoxy, Halogenalkyl, Halogenalkoxy oder Cyano steht,
W, Y und Z unabhängig voneinander für Wasserstoff, Halogen, Alkyl, Alkoxy, Halogenalkyl, Halogenalkoxy oder Cyano stehen,
A für Wasserstoff, jeweils gegebenenfalls durch Halogen substituiertes Alkyl, Alkoxyalkyl, gesättigtes, gegebenenfalls substituieites Cycloalkyl steht, in welchem gegebenenfalls mindestens ein Ringatom durch ein Heteroatom ersetzt ist,
B für Wasserstoff oder Alkyl steht,
oder
A und B gemeinsam mit dem Kohlenstoffatom an das sie gebunden sind, für einen gesättigten oder ungesättigten, gegebenenfalls mindestens ein Heteroatom enthaltenden unsubstituierten oder substituierten Cyclus stehen,
D für NH oder Sauerstoff steht,
G für Wasserstoff (a) oder für eine der Gruppen 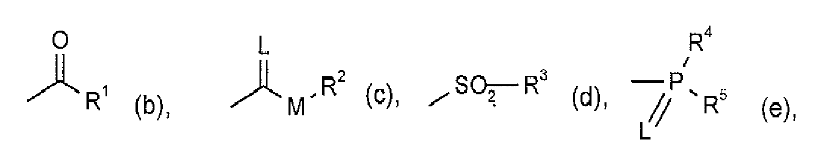 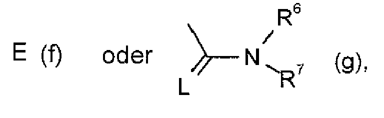
steht, worin
E für ein Metallion oder ein Ammoniumion steht,
L für Sauerstoff oder Schwefel steht,
M für Sauerstoff oder Schwefel steht,
R¹ für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetatyl, Phenoxyalkyl oder Hetaryloxyalkyl steht,
R² für jeweils gegebenenfalls durch Halogen substituiertes Alkyl, Alkenyl, Alkoxyalkyl, Polyalkoxyalkyl oder für jeweils gegebenenfalls substituiertes Cycloalkyl, Phenyl oder Benzyl steht,
R³ für gegebenenfalls durch Halogen substituiertes Alkyl oder gegebenenfalls substituiertes Phenyl steht,
R⁴ und R⁵ unabhängig voneinander für jeweils gegebenenfalls durch Halogen substituier-tes Alkyl, Alkoxy, Alkylamino, Dialkylamino, Alkylthio, Alkenylthio, Cycloalkylthio oder für jeweils gegebenenfalls substituiettes Phenyl, Benzyl, Phenoxy oder Phenylthio stehen und
R⁶ und R⁷ unabhängig voneinander für Wasserstoff, jeweils gegebenenfalls durch Halogen substituiertes Alkyl, Cycloalkyl, Alkenyl, Alkoxy, Alkoxyalkyl, für gegebenenfalls substituiertes Phenyl, für gegebenenfalls substituiertes Benzyl oder gemeinsam mit dem N-Atom, an das sie gebunden sind, für einen gegebenenfalls durch Sauerstoff oder Schwefel unterbrochenen gegebenenfalls substituierten Ring stehen
in Form ihrer Isomerengemische oder reinen Isomeren,
- mindestens einen Penetrationsförderer der Formel (II)
R⁸-O-(-EO-)ₚ-(-PO-)_{q}- R⁹ (II)
in welcher
R⁸ für geradkettiges oder verzweigtes Alkyl mit 4 bis 20 Kohlenstoffatomen steht,
R⁹ für H, Methyl, Ethyl, n-Propyl, i-Propyl, n-Butyl, i-Butyl, t-Butyl, n-Pentyl oder n-Hexyl steht,
EO für CH₂-CH₂-O- steht,
PO für 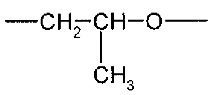 steht,
p für Zahlen von 4 bis 8 steht und
q für Zahlen von 6 bis 10 steht,
- mindestens ein Pflanzenöl,
- mindestens ein nicht-ionisches Tensid ausgewählt aus
- Polyethylenoxid-polypropylenoxid-4-butoxybuthylether,
- Polyethylenglykolethern von linearen Alkoholen,
- Umsetzungsprodukten von Fettsäuren mit Ethylenoxid und
- Mischungen dieser vor genannten Tenside und/oder
- mindestens ein anionisches Iensid

2. Verfahren zur Herstellung von Suspensionskonzentraten gemäß Anspruch 1, **dadurch gekennzeichnet, dass** man die in Anspruch 1 genannten Inhaltsstoffe sowie gegebenenfälls einen oder mehrere Zusatzstoffe aus den Gruppen der Emulgiermittel, der schaumhemmenden Mittel, der Konservierungsmittel, der Antioxydantien, der Farbstoffe und/oder der inerten Füllmaterialien miteinander vermischt und die entstehende Suspension gegebenenfalls anschließend mahlt.

3. Suspensionskonzentrate gemäß Anspruch 1, **dadurch gekennzeichnet, dass** der Gehalt
- an Verbindung der Formel (I) zwischen 5 und 30 Gew -%,
- an Penetiationsförderer der Formel (II) zwischen 5 und .30 Gew -%,
- an Pflanzenöl zwischen 20 und 55 Gew -%,
- an Tenside zwischen 2,5 und 30 Gew -%,
- an Zusatzstoffen zwischen 0 und 25 Gew.-%
liegt.

4. Verwendung von Suspensionskonzentraten gemäß Anspruch 1 zur Applikation der enthaltenen Verbindungen der Formel (I) auf Pflanzen und/oder deren Lebensraum

5. Verwendung von Suspensionskonzentraten gemäß Anspruch 1 zur Bekämpfung von Insekten

6. Mittel, **gekennzeichnet durch** einen Gehalt an einem Suspensionskonzentrat gemäß Anspruch 1 und Streckmittel und/oder ober flächenaktiven Reagenzien
